# EUROPÄISCHE PATENTSCHRIFT

(11) **EP 2 092 213 B1**
(45) Veröffentlichungstag und Bekanntmachung des Hinweises auf die Patenterteilung: **18.01.2017**
(21) Anmeldenummer: 07819383.6
(22) Anmeldetag: 27.10.2007
(51) Int. Cl.: F16F 15/134

(54) **TORSIONSSCHWINGUNGSDÄMPFERANORDNUNG**
TORSIONAL VIBRATION DAMPING ARRANGEMENT
SYSTEME D'AMORTISSEMENT DES VIBRATIONS DE TORSION

(30) Priorität: 09.11.2006 DE 102006052853
(43) Veröffentlichungstag der Anmeldung: 26.08.2009
(73) Patentinhaber: ZF Friedrichshafen AG, 88046 Friedrichshafen (DE)
(72) Erfinder: WACK, Erwin, 97464 Niederwerrn (DE); MARKOW, Alexander, 97424 Schweinfurt (DE)
(86) Internationale Anmeldenummer: PCT/EP2007/009340
(87) Internationale Veröffentlichungsnummer: WO 2008/055601

(56) Entgegenhaltungen:
- WO-A-2005/036023
- FR-A- 2 794 832
- US-B1- 6 371 857

## Beschreibung

### Technisches Gebiet

Die vorliegende Erfindung betrifft eine Torsionsschwingungsdämpferanordnung, umfassend eine Primärseite und eine gegen die Wirkung einer Dämpferelementenanordnung bezüglich der Primärseite um eine Drehachse drehbare Sekundärseite, wobei die Dämpferelementenanordnung eine Mehrzahl von in Umfangsrichtung aufeinander folgend angeordneten Federeinheiten umfasst und die Primärseite und die Sekundärseite für jede Federeinheit Umfangsabstützbereiche aufweisen, an welchen die Federeinheiten mit jeweiligen Umfangsenden abstützbar sind, ferner umfassend eine Radialabstützanordnung zur radialen Abstützung wenigstens einer Federeinheit in einem Umfangsbereich zwischen ihren Umfangsenden.

### Stand der Technik

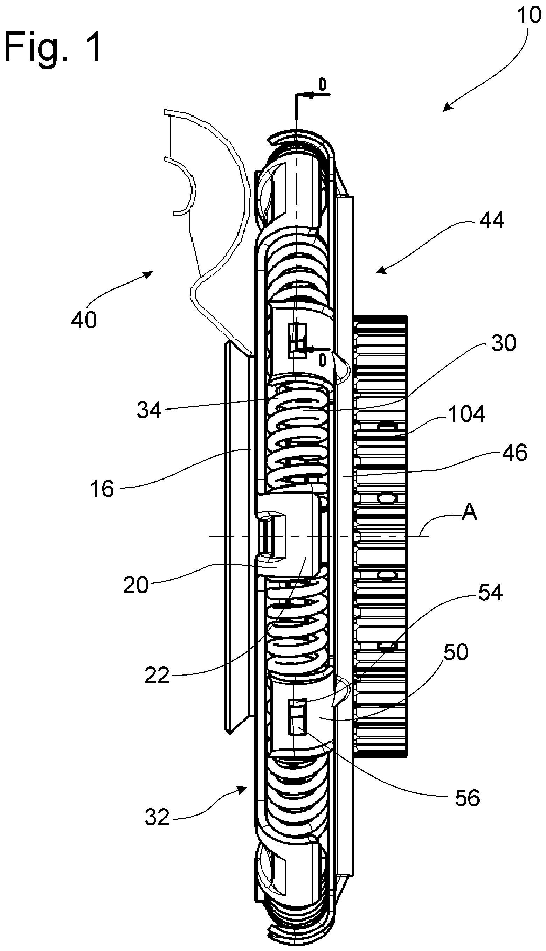

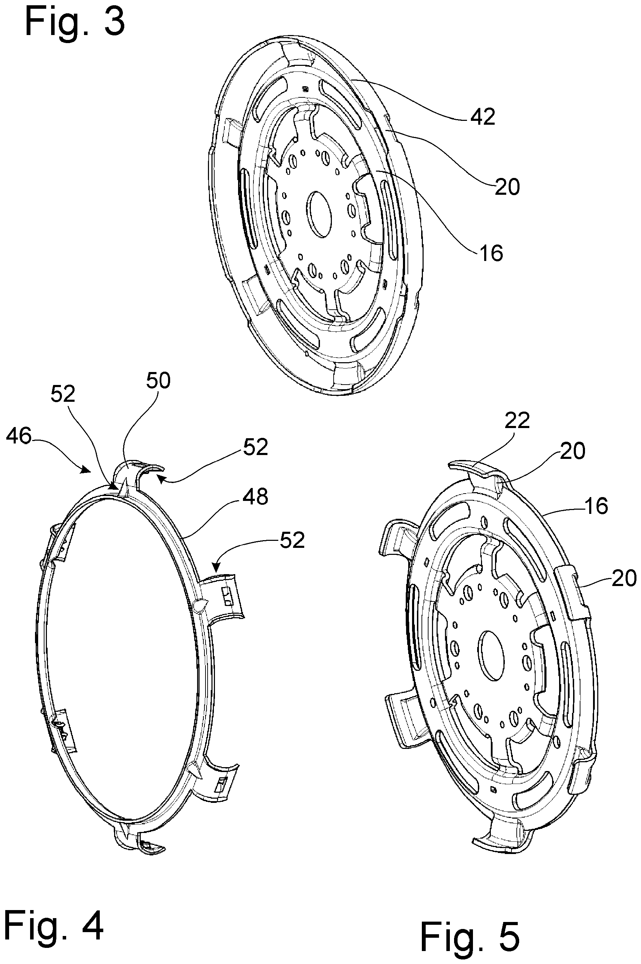

Eine derartige Torsionsschwingungsdämpferanordnung ist aus der
US 6,371,857 B1 bekannt. Die Primärseite der Torsionsschwingungsdämpferanordnung ist an einem Antrieb, gebildet durch die Kurbelwelle einer Brennkraftmaschine befestigt, während die Sekundärseite zur Aufnahme einer Reibungskupplung vorgesehen ist, durch welche eine Übertragung des vom Antrieb kommenden und von der Primärmasse übertragenen Drehmomentes auf einen Abtrieb, wie eine Getriebeeingangswelle, realisiert oder unterbrochen werden kann. Die Federeinheiten der zwischen Primär- und Sekundärseite angeordneten Dämpferelementenanordnung sind in Federfenstern von Deckblechen der Primärseite sowie in zwischen je zwei radialen Ansteuervorsprüngen einer Nabenscheibe der Sekundärseite liegenden Aussparungen aufgenommen. Um eine fliehkraftbedingte radiale Ausbeulung der Federeinheiten im Umfangsbereich zwischen je zwei radialen Ansteuervorsprüngen zu vermeiden, ist in einer am Außenumfang der Nabenscheibe vorgesehenen Nut ein ringartiges Radialabstützorgan vorgesehen, das im Umfangsbereich zwischen je zwei radialen_Ansteuervorsprüngen jeweils einen Radialabstützbereich für die zugeordnete Federeinheit aufweist. Dieser Radialabstützbereich ist durch radiale Aufdickung von radial außen her an die Federeinheit angenähert, und sichert diese in deren axial mittigem Bereich gegen die fliehkraftbedingte radiale Ausbeulung. Der Radialabstützbereich kann in Umfangsrichtung gemäß Fig. 1 relativ zur Federeinheit bewegbar sein, oder ist gemäß Fig. 4 bewegungsmäßig an die Federeinheit gekoppelt, indem er zwischen zwei Windungsabschnitte der Federeinheit greift. Auf jeden Fall ist das Radialabstützorgan nicht mit Primär- oder Sekundärseite verbunden, und damit relativ zu diesen Seiten bewegbar.

Da das Radialabstützorgan und damit die Radialabstützbereiche radial außerhalb der Federeinheiten angeordnet sind, wird zur Vermeidung des Ausbeulens der Federeinheiten ein erheblicher radialer Bauraum benötigt. Außerdem ist aufgrund der speziellen Ausführung des Radialabstützorgans - axial schmal bauend bei radial großem Innendurchmesser - mit einer geringen Steifigkeit in Achsrichtung zur rechnen. Um dennoch die Radialabstützbereiche hinreichend präzise mit der jeweiligen Federeinheit in Kontakt zu bringen, ist das Radialabstützorgan in der am Außenumfang der Nabenscheibe vorgesehenen Nut aufgenommen. Hierdurch ist nicht nur ein erhöhter Fertigungsaufwand für die Nabenscheibe erforderlich, sondern auch fertigungstechnisch weitere Maßnahmen, um das Radialabstützorgan in die Nut einbringen zu können.

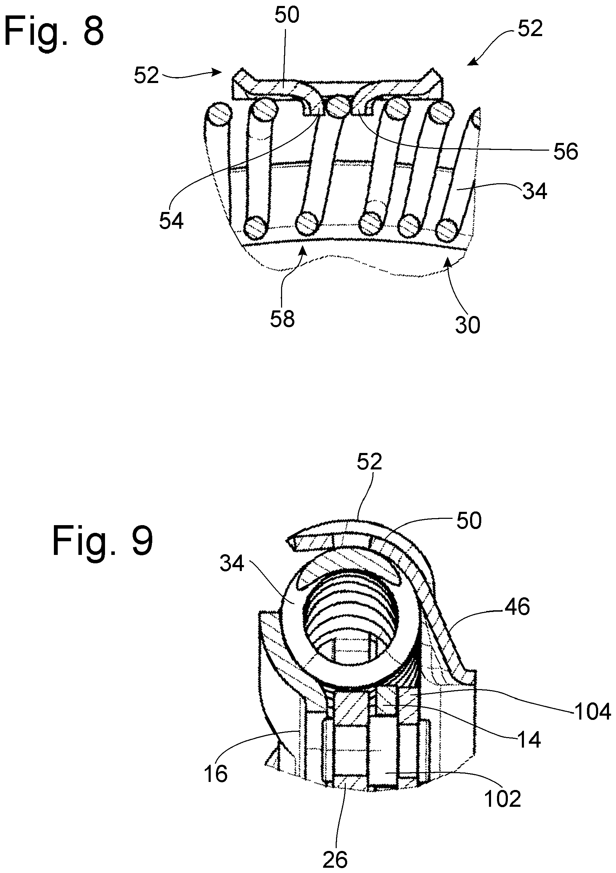

Eine weitere solche Torsionsschwingungsdämpferanordnung geht aus der
FR 2 794 832 A1 hervor. Bei dieser Torsionsschwingungsdämpferanordnung sind, in Umfangsrichtung relativ zur Primär- und zur Sekundärseite bewegbar, mehrere ringartige Radialabstützorgane vorgesehen, die auf einer Nabe der Sekundärseite radial innerhalb der Federeinheiten angeordnet sind und, pro Federeinheit, mehrere Radialabstützbereiche aufnehmen können. Jeder dieser Radialabstützbereiche umgreift die zugeordnete Federeinheit und stützt sich radial außen an einem Primärseitenring gleitend ab. Auch bei dieser Lösung können die Radialabstützbereiche in Umfangsrichtung gemäß Fig. 1 relativ zur Federeinheit bewegbar sein, oder sind gemäß Fig. 8 bewegungsmäßig an die Federeinheit_gekoppelt, indem sie jeweils zwischen zwei Windungsabschnitte der Federeinheit greifen.

Durch Anordnung der Radialabstützorgane radial innerhalb der Federeinheiten wird zwar der radiale Bauraum durch die Radialabstützorgane nicht vergrößert, es wird aber statt dessen ein Bauraum belegt, der ansonsten zur Aufnahme von radial innerhalb der vorgenannten Federeinheiten angeordneten weiteren Federeinheiten zur Verfügung stehen würde. Außerdem müssen sich die Radialabstützbereiche zur Gewährleistung einer hinreichenden Steifigkeit radial außen an dem Primärseitenring gleitend abstützen, wodurch sich auf die Entkopplungsgüte Einfluss nehmende Reibungseffekte bemerkbar machen.

Auch aus der DE 42 13 341 A1 ist eine Torsionsschwingungsdämpferanordnung bekannt. Diese Torsionsschwingungsdämpferanordnung ist in einen hydrodynamischen Drehmomentwandler integriert und dient dazu, ein Drehmoment zwischen einem Wandlergehäuse und einer Turbinenradnabe zu übertragen. Die Torsionsschwingungsdämpferanordnung weist zwei Federeinheiten auf, jede gebildet durch zwei ineinander geschachtelte, nahezu über 180° sich erstreckende Schraubendruckfedern. Jede dieser Federeinheiten ist in ihren Umfangsenden an Umfangsabstützbereichen der Primärseite bzw. der Sekundärseite der Torsionsschwingungsdämpferanordnung umfangsmäßig abgestützt. Zwischen den Umfangsenden, also in demjenigen Bereich, in dem die Federeinheiten auch unter Fliehkrafteinwirkung nach radial außen gepresst werden, ist an der Primärseite, hier gebildet unter anderem durch das Wandlergehäuse, ein über die gesamte Länge der Federeinheiten sich erstreckendes, reibungsminderndes Abstützteil vorhanden. Bei Auftreten von Fliehkräften wird sich jede der Federeinheiten nach radial außen an das ihr zugeordnete reibungsmindernde Abstützelement anlegen, was dazu führt, dass mit zunehmender Drehzahl eine verstärkte Reibung wirksam wird und dementsprechend die Entkopplungsgüte abnimmt.

Aus der DE 43 41 373 C2 ist es bekannt, bei Torsionsschwingungsdämpferanordnungen die über große Umfangsbereiche sich erstreckenden Federn einer jeweiligen Federeinheit durch Gleitschuhe abzustützen, so dass nicht direkt die Federn an nach radial außen abstützenden Bauteilen reiben, sondern diese Gleitschuhe.

Bei einer aus der US 4,279,132 bekannten Torsionsschwingungsdämpferanordnung umfassen die Federeinheiten jeweils mehrere in Umgangsrichtung aufeinander folgende Schraubendruckfedern, die an den Umfangsenden der jeweiligen Federeinheiten bezüglich der Primärseite bzw. der Sekundärseite in Umfangsrichtung abgestützt bzw. abstützbar sind und die an einander gegenüber liegenden Zwischenenden über Zwischenabstützelemente abgestützt sind. Diese Zwischenabstützelemente sind an bezüglich der Primärseite und der Sekundärseite im Wesentlichen frei drehbaren Ringen vorgesehen. Eine Abstützung der einzelnen Federn der Federeinheiten in ihrem Umfangsmittenbereich nach radial außen ist nicht vorgesehen bzw. auf Grund der vergleichsweise kurzen Umfangserstreckung dieser Federn auch nicht erforderlich.

### Darstellung der Erfindung

Es ist die Aufgabe der vorliegenden Erfindung, bei einer gattungsgemäßen Torsionsschwingungsdämpferanordnung dafür zu sorgen, dass ohne wesentliche Bauraumverluste auch bei vergleichsweise langen Federeinheiten die im Drehbetrieb auftretenden Fliehkräfte zu einer Beeinträchtigung der Entkopplungsqualität führen.

Erfindungsgemäß wird diese Aufgabe gelöst durch eine Torsionsschwingungsdämpferanordnung, umfassend eine Primärseite und eine gegen die Wirkung einer Dämpferelementenanordnung bezüglich der Primärseite um eine Drehachse drehbare Sekundärseite, wobei die Dämpferelementenanordnung eine Mehrzahl von in Umfangsrichtung aufeinander folgend angeordneten Federeinheiten umfasst und die Primärseite und die Sekundärseite für jede Federeinheit Umfangsabstützbereiche aufweisen, an welchen die Federeinheiten mit jeweiligen Umfangsenden abstützbar sind, ferner umfassend eine Radialabstützanordnung zur radialen Abstützung wenigstens einer Federeinheit in einem Umfangsbereich zwischen ihren Umfangsenden.

Dabei ist weiter vorgesehen, dass die Radialabstützanordnung wenigstens ein ringartiges Radialabstützorgan umfasst, das in Zuordnung zu der wenigstens einen der Federeinheiten einen zwischen den Umfangsenden diese radial abstützenden Radialabstützbereich aufweist, wobei das wenigstens eine ringartige Radialabstützorgan bezüglich der Primärseite und der Sekundärseite um die Drehachse drehbar ist.

Eine baulich einfach zu realisierende Ausgestaltungsform kann derart ausgebildet sein, dass das wenigstens eine ringartige Radialabstützorgan einen axial folgend auf die Federeinheiten angeordneten Ringkörper umfasst, von welchem wenigstens ein nach radial außen sich erstreckender und eine radial abgestützte Federeinheit radial außen und axial übergreifender Radialabstützbereich ausgeht.

Um dabei vor allem bei großen Drehzahlen eine Überlastung der Radialabstützbereiche durch zu starke Fliehkräfte vermeiden zu können, wird vorgeschlagen, dass von dem Ringkörper eine Mehrzahl von Radialabstützbereichen an verschiedenen Umfangspositionen ausgeht und dass die Radialabstützbereiche durch einen Versteifungsringbereich miteinander verbunden sind.

Bei einer alternativen Ausgestaltungsform kann die Radialabstützanordnung derart ausgebildet sein, dass das wenigstens eine ringartige Radialabstützorgan einen sich im Wesentlichen radial innerhalb der Federeinheiten erstreckenden Ringkörper umfasst, von welchem wenigstens ein nach radial außen sich erstreckender Radialabstützbereich ausgeht und sich zwischen zwei Windungsbereichen einer Federeinheit hindurch in den Innenbereich dieser Federeinheit erstreckt, wobei der Radialabstützbereich in seinem in der Federeinheit liegenden Abschnitt mit einem wenigstens entlang eines Teilbereichs der Federeinheit sich erstreckenden Sicherungsorgan gekoppelt ist. Hierbei kann weiter vorgesehen sein, dass von dem Ringkörper eine Mehrzahl von Radialabstützbereichen an verschiedenen Umfangspositionen ausgeht und dass das Sicherungsorgan einen mit allen Radialabstützbereichen gekoppelten Sicherungsring umfasst.

Jede Federeinheit kann eine mit ihren Umfangsenden an den Umfangsabstützbereichen der Primärseite und der Sekundärseite abstützbare Feder umfassen, wobei selbstverständlich auch bei dem erfindungsgemäßen Aufbau hier ineinander geschachtelte Federn vorgesehen sein können. Alternativ ist es möglich, dass jede Federeinheit eine Mehrzahl von in Umfangsrichtung aufeinander folgenden Federn umfasst, die an einander gegenüberliegenden Zwischenenden durch Zwischenabstützelemente bezüglich einander abgestützt sind.

### Kurze Beschreibung der Zeichnungen

Die vorliegende Erfindung wird nachfolgend mit Bezug auf die beiliegenden Figuren beschrieben. Es zeigt:
- Fig. 1: eine Ansicht einer erfindungsgemäßen Torsionsschwingungsdämpferanordnung von radial außen;
- Fig. 2: eine perspektivische Ansicht der in Fig. 1 dargestellten Torsionsschwingungsdämpferanordnung;
- Fig. 3: ein bei einer herkömmlichen Torsionsschwingungsdämpferanordnung eingesetztes Deckscheibenelement;
- Fig. 4: ein ringartiges Radialabstützelement der erfindungsgemäßen Torsionsschwingungsdämpferanordnung;
- Fig. 5: eine der Fig. 3 entsprechende Ansicht eines Deckscheibenelements für eine erfindungsgemäß aufgebaute Torsionsschwingungsdämpferanordnung;
- Fig. 6: die Torsionsschwingungsdämpferanordnung der Fig. 1 in Explosionsdarstellung;
- Fig. 7: die Torsionsschwingungsdämpferanordnung der Fig. 1 in Axialansicht und teilweise aufgeschnitten;
- Fig. 8: das in Fig. 7 eingekreiste Detail vergrößert;
- Fig. 9: eine Schnittansicht des Details der Fig. 8;
- Fig. 10: eine Prinzipdarstellung, welche in ihren Darstellungen a) und b) das Schaltungsprinzip einer herkömmlich aufgebauten Torsionsschwingungsdämpferanordnung bzw. einer erfindungsgemäß aufgebauten Torsionsschwingungsdämpferanordnung zeigt;
- Fig. 11: eine alternative Ausgestaltungsart eines ringartigen Radialabstützorgans;
- Fig. 12: eine weitere Explosionsansicht einer Torsionsschwingungsdämpferanordnung mit dem in Fig. 11 gezeigten ringartigen Radialabstützorgan;
- Fig. 13: eine Explosionsansicht einer Torsionsschwingungsdämpferanordnung mit zwei ringartigen Radialabstützorganen;
- Fig. 14: eine Axialansicht der Torsionsschwingungsdämpferanordnung der Fig. 13;
- Fig. 15: eine Detailansicht der Torsionsschwingungsdämpferanordnung der Fig. 14, teilweise geschnitten dargestellt;
- Fig. 16: eine weitere Detailschnittansicht der Torsionsschwingungsdämpferanordnung der Fig. 14;
- Fig. 17: eine Teil-Axialansicht einer Torsionsschwingungsdämpferanordnung gemäß einer alternativen Ausgestaltungsform, teilweise geschnitten dargestellt;
- Fig. 18: eine Längsschnittansicht der in Fig. 17 dargestellten Torsionsschwingungsdämpferanordnung;
- Fig. 19: eine perspektivische Teil-Ansicht wesentlicher Teile einer erfindungsgemäßen Torsionsschwingungsdämpferansicht;
- Fig. 20: die in Fig. 19 gezeigte Anordnung, teilweise in Explosionsdarstellung;
- Fig. 21: die Torsionsschwingungsdämpferanordnung der Fig. 19 und 20 im belasteten Zustand;
- Fig. 22: eine weitere Prinzipansicht einer Torsionsschwingungsdämpferanordnung mit einer mehrere in Umfangsrichtung aufeinander folgende Schraubendruckfedern umfassenden Federeinheit;
- Fig. 23: eine Teil-Längsschnittansicht eines hydrodynamischen Drehmomentwandlers mit einer Torsionsschwingungsdämpferanordnung.

### Bester Weg zur Ausführung der Erfindung

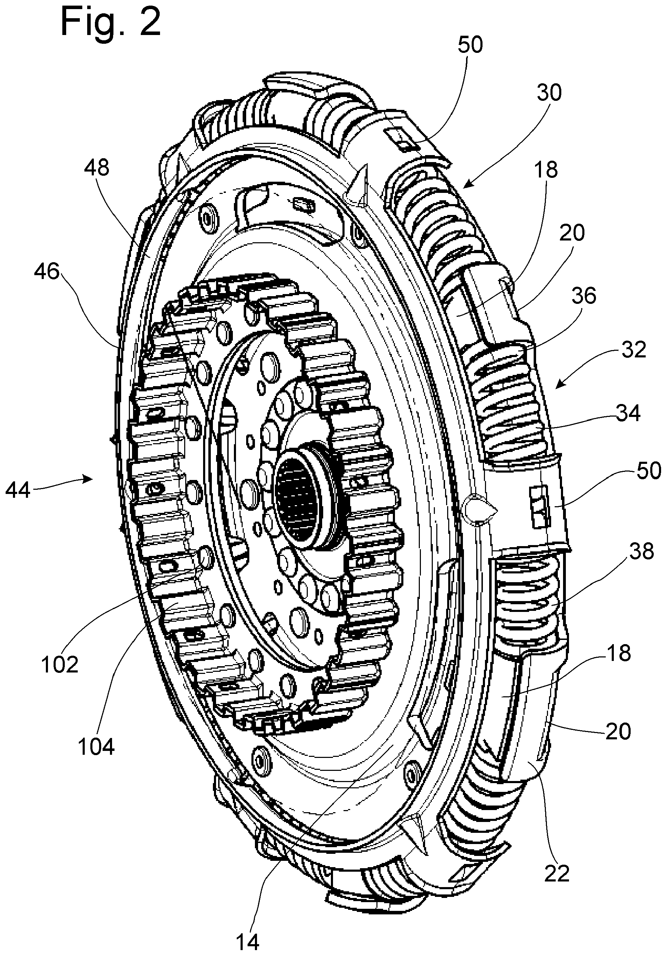

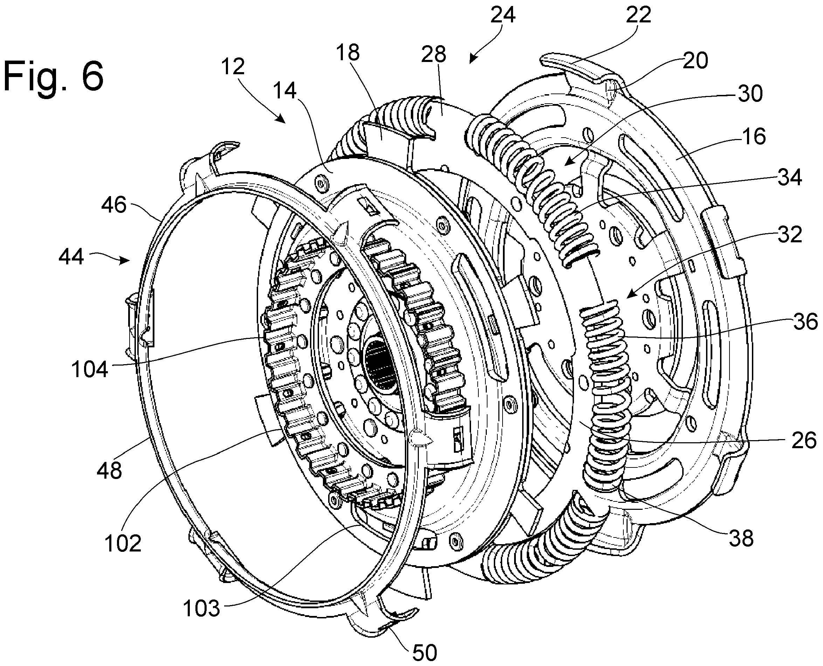

In den Fig. 1 und 2 ist eine erfindungsgemäß aufgebaute Torsionsschwingungsdämpferanordnung allgemein mit 10 bezeichnet. Diese Torsionsschwingungsdämpferanordnung 10, die in Fig. 6 auch in Explosionsansicht gezeigt ist, umfasst eine Sekundärseite 12 mit zwei beispielsweise aus Blechmaterial gebildeten Deckscheibenelementen 14, 16. Die beiden Deckscheibenelemente 14, 16 weisen an mehreren Umfangspositionen nach radial außen greifende Umfangsabstützbereiche 18, 20 auf. Dabei sind die Umfangsabstützbereiche 18 des Deckscheibenelements 14 im Wesentlichen eben ausgebildet, während die Umfangsabstützbereiche 20 des Deckscheibenelements 16 in ihrem radial äußeren Endbereich axial abgebogene Lappen 22 aufweisen und mit diesen eine Radialabstützungsfunktion erfüllen.

Eine allgemein mit 24 bezeichnete Primärseite der Torsionsschwingungsdämpferanordnung 10 umfasst ein zwischen den beiden Deckscheibenelementen 14 und 16 angeordnetes Zentralscheibenelement 26, das in Zuordnung zu den Umfangsabstützbereichen 18, 20 der Primärseite 12 Umfangsabstützbereiche 28 aufweist. Es sei hier darauf hingewiesen, dass die Begrifflichkeiten "Primärseite" und "Sekundärseite" nicht dahingehend beschränkend sind, in welcher Richtung ein Drehmoment zu übertragen ist.

An den Umfangsabstützbereichen 18, 20 der Primärseite 24 und 28 der Sekundärseite 12 stützen sich die Federeinheiten 30 an einer allgemein mit 32 bezeichneten Dämpferelementenanordnung ab. Jede Federeinheit 30 umfasst eine näherungsweise in Umfangsrichtung sich erstreckende Schraubendruckfeder 34 und ist an jeweiligen Umfangsenden 36, 38 an den Umfangsabstützbereichen 18, 20 bzw. 28 abgestützt. Da die beiden Deckscheibenelemente 14 und 16 durch Vernietung oder dergleichen axial und in Umfangsrichtung fest miteinander verbunden sind, kann das Zentralscheibenelement 26 der Sekundärseite 24 sich unter Kompression der Federeinheiten 30 bezüglich den Deckscheibenelementen 14, 16 verdrehen, um dabei auftretende Drehschwingungen zu bedämpfen.

Es ist selbstverständlich, dass beispielsweise durch die beiden Deckscheibenelemente 14, 16 miteinander koppelnde Elemente, beispielsweise Nietbolzen, eine Drehwinkelbegrenzungsfunktion zwischen Primärseite 24 und Sekundärseite 12 vorgesehen sein kann, um eine Überlastung der Federeinheiten 30 durch zu starke Kompression zu verhindern.

Man erkennt aus dem Vergleich der Fig. 3 und 5, dass im Gegensatz zu dem bei einem erfindungsgemäßen Aufbau einzusetzenden und in Fig. 5 gezeigten Deckscheibenelement 16 die Umfangsabstützbereiche 20 tatsächlich auf denjenigen Umfangsbereich begrenzt sind, in welchem jeweilige Federeinheiten mit ihren Umfangsenden 36, 38 mit diesen zusammenwirken, um dort einerseits die Umfangsabstützung und andererseits durch die Lappen 22 auch eine Radialabstützung zu erzielen. Bei dem herkömmlichen und in Fig. 3 gezeigten Deckscheibenelement 16' sind zwischen den einzelnen Umfangsabstützbereichen durchgehende Blechabschnitte 42 vorhanden, an welche die Federeinheiten 30 sich radial nach außen anlegen und somit eine Radialabstützung erfahren. Dies führt jedoch zu vergleichsweise starken Reibeffekten, welche eine auch fliehkraftabhängig auftretende Beeinträchtigung der Entkopplungsqualität zwischen der Primärseite 24 und der Sekundärseite 12 mit sich bringen. Um jedoch auch bei dem erfindungsgemäßen Aufbau einer Torsionsschwingungsdämpferanordnung 10 für die vor allem bei längeren Federeinheiten 30 erforderliche Radialabstützung sorgen zu können, ist eine allgemein mit 44 bezeichnete Radialabstützanordnung vorgesehen. Diese umfasst ein in Fig. 4 erkennbares ringartiges Radialabstützorgan 46, das an mehreren Umfangsabschnitten ausgehend von einem Ringkörper 48 zunächst nach radial außen und dann axial sich erstreckende Radialabstützbereiche 50 umfasst. Diese Radialabstützbereiche 50 übergreifen jeweils eine Federeinheit 30 in einem Bereich näherungsweise zwischen ihren Umfangsenden 36 und 38 und stützen diese somit in radialer Richtung ab. Das ringartige Abstützorgan kann beispielsweise aus Blechmaterial geformt sein und an verschiedenen Bereichen Umformungen 52 aufweisen, welche für eine Versteifung bzw. Stabilisierung sorgen.

Man erkennt vor allem in den Fig. 1 und 2, dass das ringartige Radialabstützorgan 46 mit seinem Ringkörper 48 axial folgend auf die Federeinheiten 30 der Dämpferelementenanordnung 32 liegt und dass zwischen jeweils zwei Umfangsabstützbereiche 18, 20 der Sekundärseite 12, die, wie bereits dargelegt, mit den Lappen 22 an den jeweiligen Umfangsenden 36, 38 der Federeinheiten 30 auch eine Radialabstützungsfunktion erfüllen, ein Radialabstützbereich 50 des ringartigen Radialabstützorgans 46 eingreift und dort näherungsweise mit dem Mittenbereich der verschiedenen Federeinheiten bzw. der Schraubendruckfedern 34 zusammenwirkt. Es ist somit bezüglich einer Drehachse A eine näherungsweise symmetrische Belastung des ringartigen Radialabstützorgans 46 gewährleistet, so dass dieses auch bei vergleichsweise starker Fliehkrafteinwirkung seine Radialpositionierung bezüglich der Primärseite 24 bzw. auch der Sekundärseite 12 näherungsweise beibehalten wird, da es von allen Federeinheiten 30 näherungsweise gleichmäßig belastet wird. Bei Auftreten von Drehschwingungen und Bewegung der Primärseite 24 bzw. der Sekundärseite 12 in Umfangrichtung kann dieses ringartige Radialabstützorgan 46 sich bezüglich sowohl der Primärseite 24 als auch der Sekundärseite 12 bewegen, so dass keine Reibkräfte entstehen bzw. erforderlich sind, um die Federeinheiten 30 in Umfangsrichtung abzustützen.

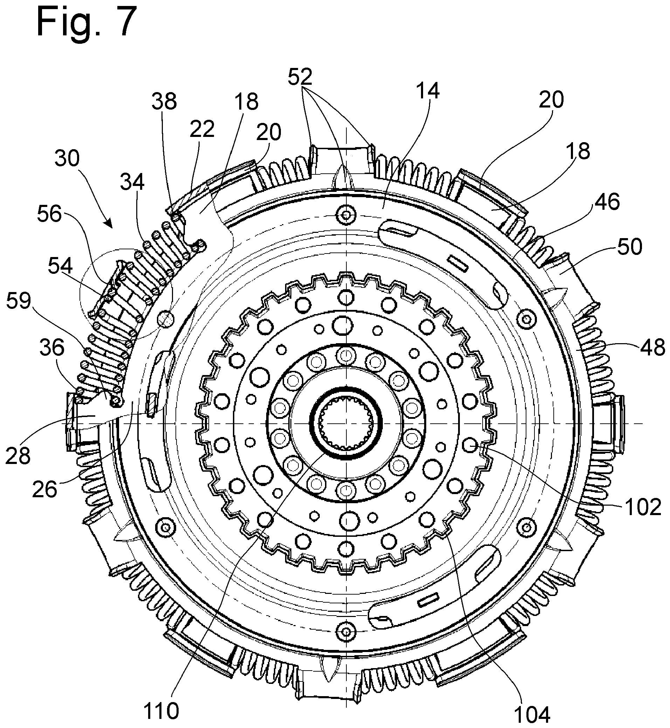

Um die definierte Abstützwechselwirkung zwischen dem ringartigen Radialabstützorgan 46 und den Federeinheiten 30 zu gewährleisten, kann, wie dies in den Fig. 7 bis 9 verdeutlicht ist, das ringartige Radialabstützorgan 46 in Umfangsrichtung mit den jeweiligen Federeinheiten 30 im Bereich der Radialabstützbereiche 50 gekoppelt sein. So erkennt man in Fig. 8, dass die Radialabstützbereiche 50 näherungsweise in ihrer Umfangsmitte zwei nach radial innen greifende Kopplungsvorsprünge 54, 56 aufweisen, die zwischen zwei unmittelbar benachbarte Windungen der Schraubendruckfedern 34, also der Federeinheiten 30, näherungsweise in einem Umfangsmittenbereich 58 dieser Federeinheiten 30 eingreifen und somit eine der Federwindungen in Umfangsrichtung einschließen. Zu diesem Zwecke können die mit den Radialabstützbereichen 50 zusammenwirkenden Schraubendruckfedern 34 so ausgebildet sein, dass sie in ihrem Umfangsmittenbereich 58 bzw. in demjenigen Bereich, in welchem sie mit einem jeweiligen Radialabstützbereich 50 zusammenwirken, einen etwas größeren Windungsabstand aufweisen, so dass auch bei Kompression vermieden wird, dass die nach radial innen greifenden Vorsprünge 54 und 56 zwischen zwei Windungsabschnitten eingespannt werden und dies zu einer ungünstigen Belastung der Schraubendruckfedern 34 führen könnte.

In Fig. 7 erkennt man weiter, dass das Zentralscheibenelement 26 in seinen nach radial außen zwischen jeweilige Umfangsenden 36, 38 zweier Schraubendruckfedern 34 eingreifenden Umfangsabstützbereichen 28 in diese Umfangsenden 36, 38 eingreifende und somit die Federeinheiten 30 ebenfalls dort radial sichernde Stützvorsprünge 59 aufweisen.

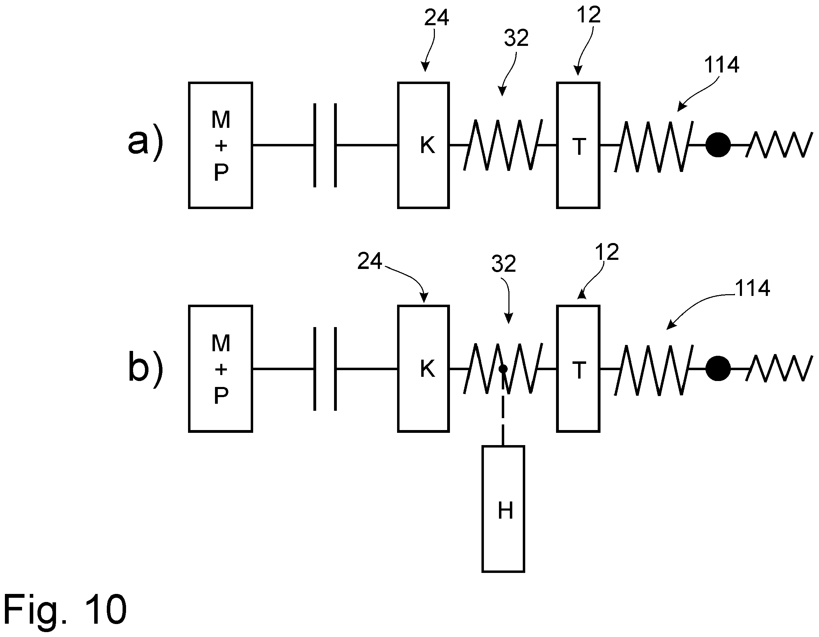

In Fig. 10 ist das Schaltungsprinzip der bei einer Torsionsschwingungsdämpferanordnung schwingenden Massen bzw. Elastizitäten veranschaulicht. Dabei zeigt die Darstellung a) ein herkömmliches System, während die Darstellung b) eine erfindungsgemäß aufgebaute Torsionsschwingungsdämpferanordnung veranschaulicht.

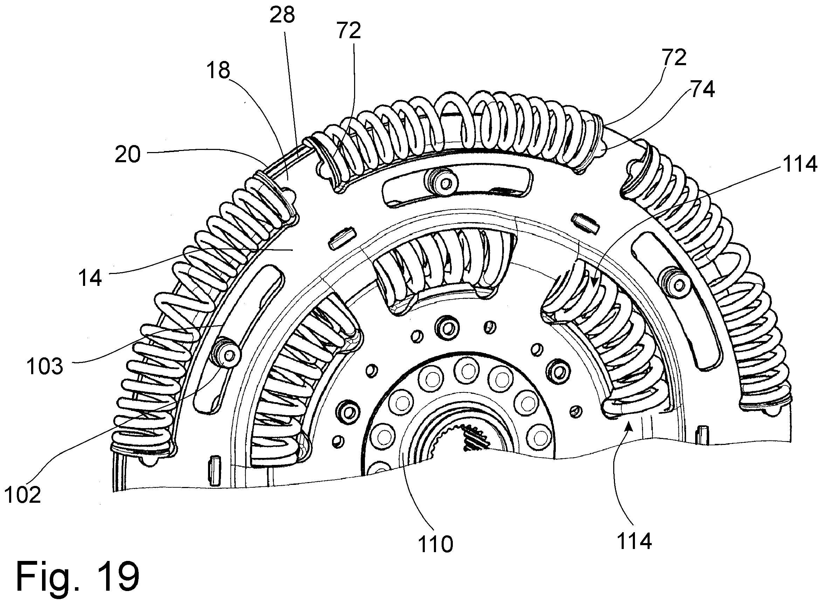

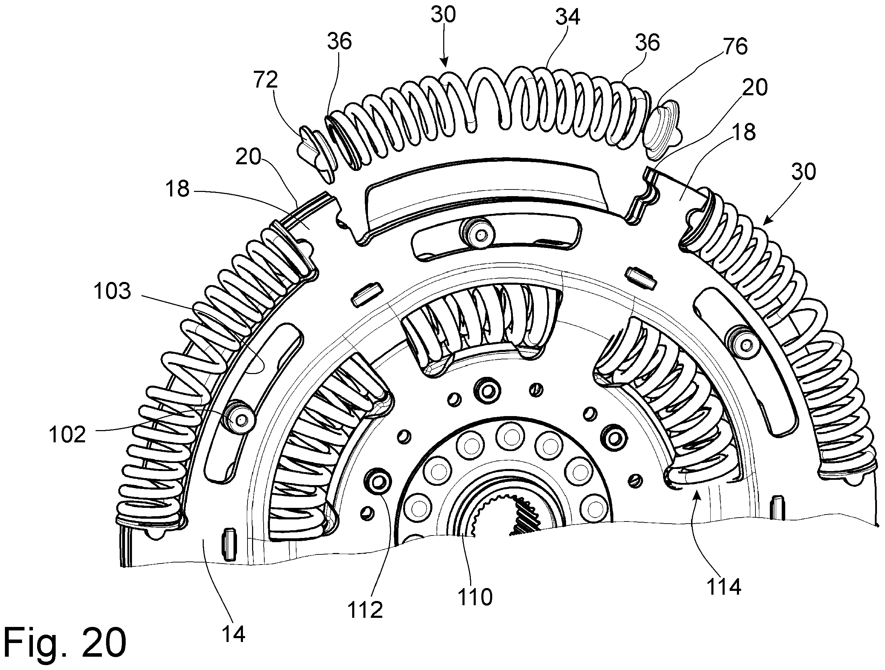

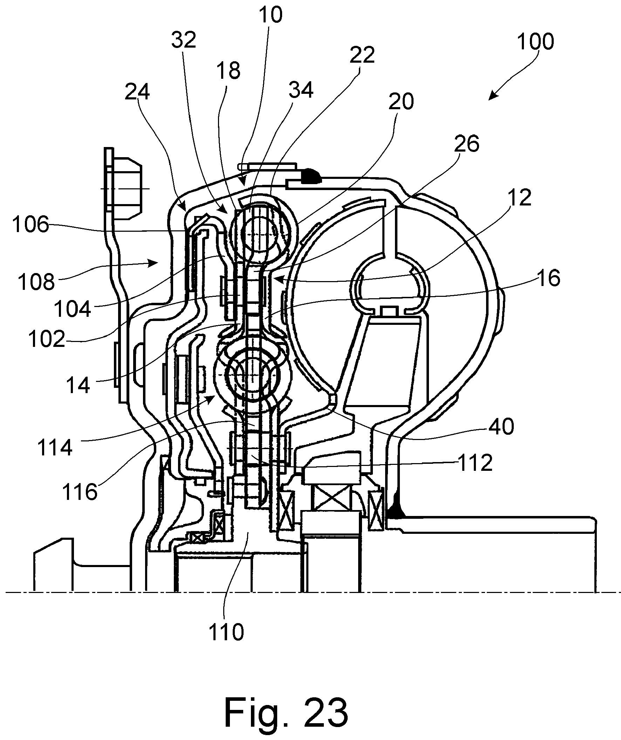

Es sei zunächst unter Bezug auf die Fig. 10a und auch weiter unter Bezug auf die Fig. 23 das Grundprinzip einer derartigen Torsionsschwingungsdämpferanordnung erläutert, welche zwar grundsätzlich den gleichen Aufbau aufweist, wie die erfindungsgemäße, jedoch kein ringartiges Radialabstützorgan, wie vorangehend beschrieben. Man erkennt in Fig. 23 einen hydrodynamischen Drehmomentwandler 100, in welchen eine derartige Torsionsschwingungsdämpferanordnung integriert ist. Hier bezeichnen gleiche Bezugszeichen gleiche Bauteile, wie vorangehend beschrieben. Man erkennt die Nabenscheibe 26, die über Nietbolzen 102 mit einem Verzahnungselement 104 unter Beibehalt eines axialen Zwischenraums fest verbunden ist. Das Verzahnungselement 104 steht radial außen in Verzahnungseingriff mit einer Reiblamelle 106 einer allgemein mit 108 bezeichneten Überbrückungskupplung. Hinsichtlich der Dämpferelementenanordnung 32 bilden die Nabenscheibe 26 und das Verzahnungsteil 104 mit den damit festgekoppelten Massen die Primärseite 24. Im Zwischenraum zwischen dem Verzahnungselement 104 und der Nabenscheibe 26 liegt das Deckscheibenelement 114, wobei die Nietbolzen 102 in Fig. 19, 20 beispielsweise erkennbare langlochartige Öffnungen 103 im Deckscheibenelement 14 durchsetzen und somit die Relativverdrehbarkeit gewährleisten, gleichzeitig aber auch eine Drehwinkelbegrenzungsfunktion erfüllen. Die beiden Deckscheibenelemente 14, 16, welche im Einrückzustand der Überbrückungskupplung 108 den Drehmomentenfluss in Richtung zu einer Turbinenradnabe 110 fortsetzen, bilden die Sekundärseite 12 dieses Bereichs der Torsionsschwingungsdämpferanordnung 10. Mit dieser Sekundärseite 12, also den Deckscheibenelementen 14 und 16 ist radial innen durch Nietbolzen 112, welche auch die Deckscheibenelemente 14 und 16 fest zusammenhalten, das Turbinenrad 40 fest verbunden. Bezüglich einer zweiten, weiter radial innen positionierten und in den vorangehend erläuterten Figuren nicht dargestellten Dämpferelementenanordnung 114 bilden die Deckscheibenelemente 14 und 16 die Primärseite, und eine weitere, radial innerhalb der erstgenannten Nabenscheibe 26 positionierte Nabenscheibe 116 bildet im Wesentlichen eine Sekundärseite dieses weiteren Schwingungssystems. Diese Sekundärseite, d.h. die radial innere Nabenscheibe 116, ist dann durch Vernietung mit der Turbinennabe 110 fest verbunden.

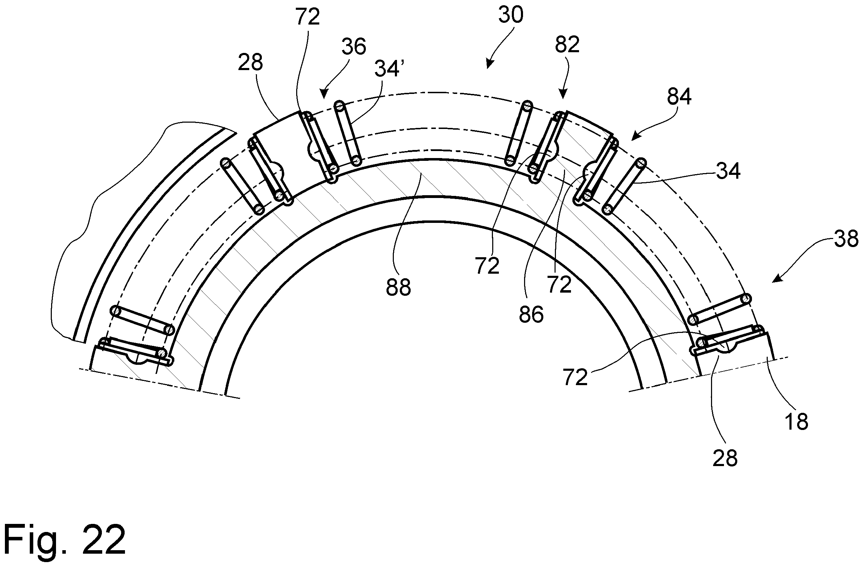

Vergleicht man nun die Darstellung der Fig. 10a mit dem in Fig. 22 gezeigten konstruktiven Aufbau, so erkennt man, dass im Drehmomentenfluss zunächst das im Kasten "M+P" dargestellte Massenträgheitsmoment des antreibenden Motors einschließlich der Eingangsbereiche des Drehmomentwandlers 100, also im Wesentlichen auch einer Gehäuseanordnung desselben, liegt. Darauf folgt ein mit "K" bezeichneter Block, welcher das Massenträgheitsmoment der Überbrückungskupplung 108 bzw. aller damit verkoppelten Bauteile, insbesondere auch der Primärseite 24 des radial äußeren Schwingungssystems veranschaulicht, also des Verzahnungsteils 104 und der Nabenscheibe 26. Über die durch eine Feder symbolisierte Dämpferelementenanordnung 32 verläuft das Drehmoment dann zu einem Block "T", welcher das Massenträgheitsmoment der Sekundärseite 12 der Torsionsschwingungsdämpferanordnung 10 bezüglich der Dämpferelementenanordnung 32, insbesondere also des Massenträgheitsmoments der Deckscheibenelemente 14 und 16 sowie des damit fest verbundenen Turbinenrads 40, veranschaulicht. Im Momentenfluss folgt dann die Dämpferelementenanordnung 114, welche auch hier wieder durch Federn repräsentiert ist, die das Drehmoment dann an einen Bereich weitergibt, dessen Massenträgheitsmoment durch einen schwarzen Punkt veranschaulicht ist und im Wesentlichen die radial innere Nabenscheibe 112, die Turbinenradnabe 110 sowie eine nicht weiter dargestellte Getriebeeingangswelle umfassen. Die dann noch folgende Elastizität symbolisiert die Verwindbarkeit der Getriebeeingangswelle.

Vergleicht man nun dieses Schaltungsprinzip mit dem vorangehend erläuterten erfindungsgemäßen Aufbau, so erkennt man, dass das ringartige Radialsicherungsorgan 46 schwingungstechnisch angekoppelt ist an die Federeinheiten 30 der Dämpferelementenanordnung 32, wie dies in Fig. 10b durch eine gestrichelte Linie veranschaulicht ist. D.h., das ringartige Radialabstützorgan 46 bildet zusammen mit der Elastizität der Dämpferelementenanordnung 32 ein weiteres Schwingungssystem, das selbstverständlich auch eine Resonanzstelle aufweist. Durch Beeinflussung der Masse des Blocks "H", also des ringartigen Axialabstützorgans 46 kann also die Entkopplungsqualität des Systems weiter verbessert werden, indem versucht wird, die Eigenfrequenz dieses Systems in einem Bereich von unter 800 Umdrehungen pro Minute anzusiedeln. Ist dies aus Bauraumgründen nicht möglich, so kann versucht werden, die Eigenfrequenz derart abzustimmen, dass sie oberhalb eines akustisch relevanten Fahrbereichs liegt, also beispielsweise über einer Drehzahl von etwa 4000 Umdrehungen pro Minute.

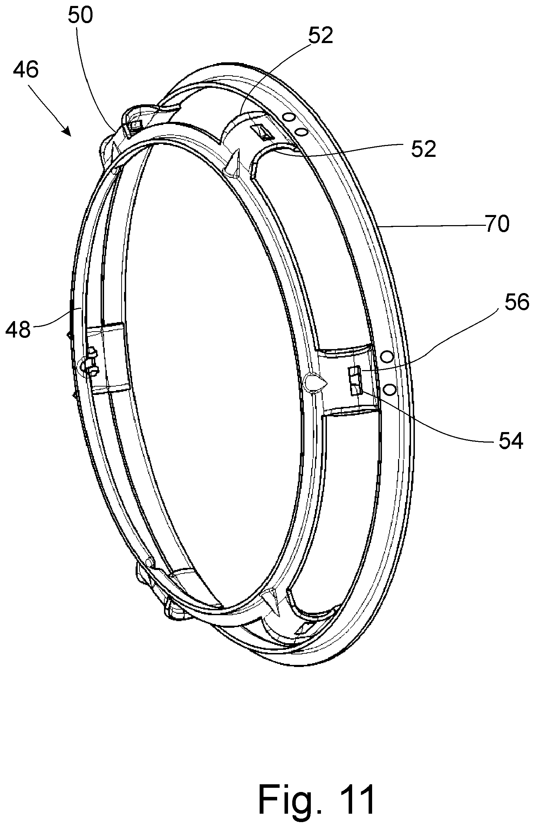

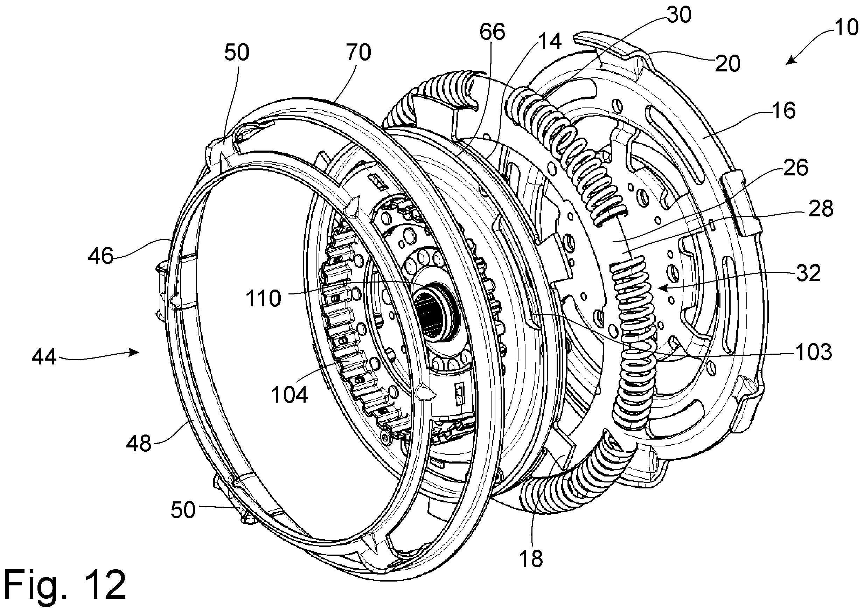

In Fig. 11 und 12 ist eine alternative Ausgestaltungsart eines ringartigen Radialabstützorgans 46 gezeigt. Man erkennt dessen Ringkörper 48 mit den Axialabstützbereichen 50. Diese sind im Bereich ihrer vom Ringkörper 48 entfernten freien Enden mit einem Versteifungsring 70 fest verbunden, beispielsweise durch Vernietung. Dieser Versteifungsring 70, der im Wesentlichen radial außerhalb der Dämpferelementenanordnung 32 liegt, stellt sicher, dass die im Rotationsbetrieb auf die Radialabstützbereiche 50 einwirkenden Fliehkräfte, welche primär durch die radiale Abstützung der Federeinheiten 30 generiert werden, nicht zu einer übermäßigen Verformung dieser Radialabstützbereiche 50 führen können. Auf diese Art und Weise wird es möglich, das ringartige Radialabstützorgan 46 aus vergleichsweise flexiblem Blechmaterial herzustellen. Gleichzeitig kann dieser Versteifungsring 70 dazu genutzt werden, die Masse bzw. das Massenträgheitsmoment des Radialabstützorgans 46 im vorangehend dargelegten Sinne zu beeinflussen.

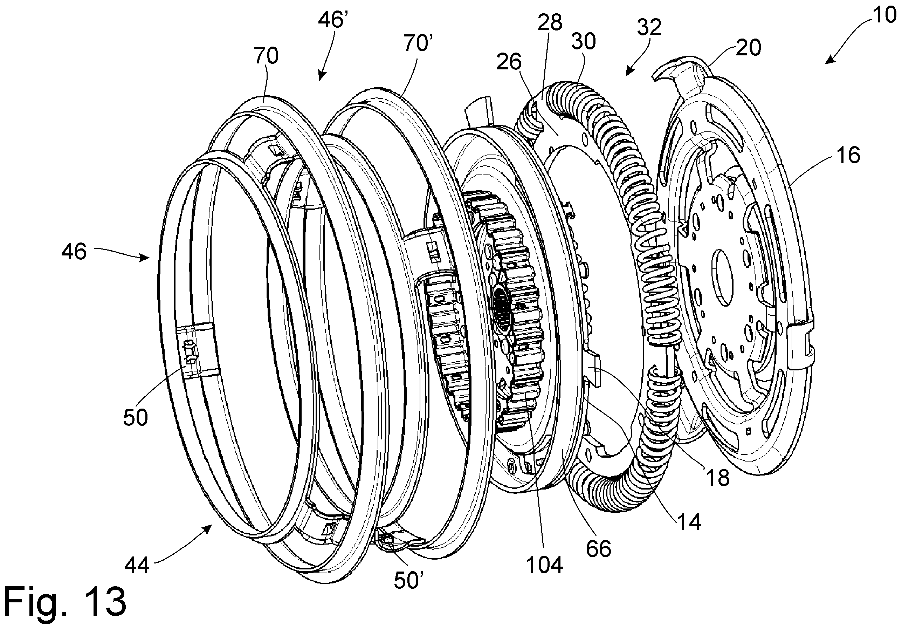

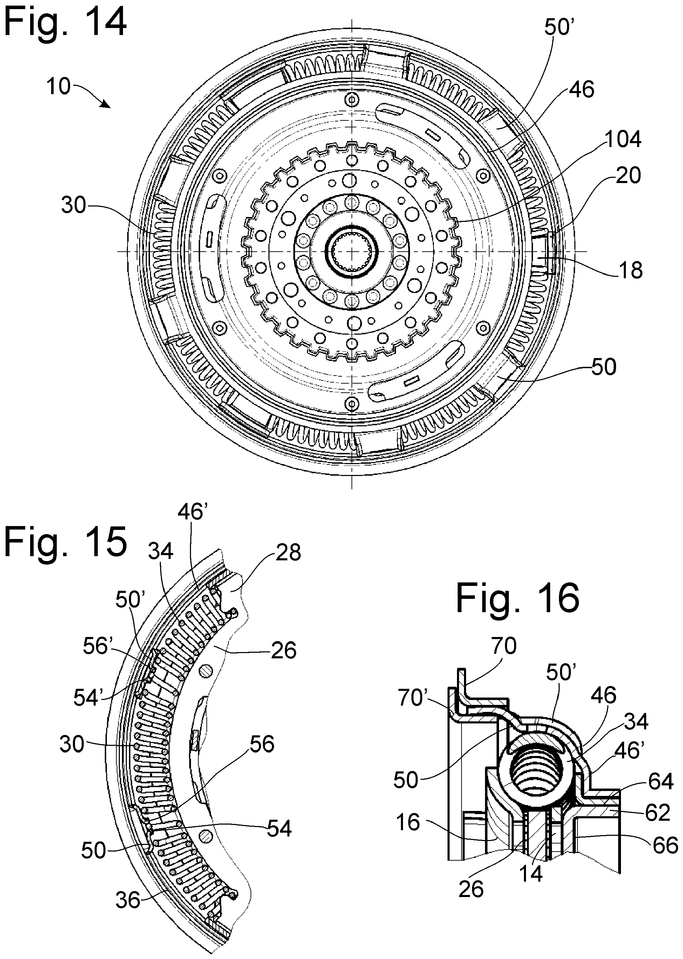

Eine weitere Abwandlungsmöglichkeit einer erfindungsgemäß aufgebauten Torsionsschwingungsdämpferanordnung ist in den Fig. 13 bis 16 gezeigt. Man erkennt hier zwei ringartige Radialabstützorgane 46 und 46', die beispielsweise so aufgebaut sein können, wie vorangehend mit Bezug auf die Fig. 11 und 12 erläutert, also jeweils einen Versteifungsring 70, 70' aufweisen können. Die beiden Radialabstützorgane 46 und 46' sind grundsätzlich wieder so aufgebaut, dass sie in Zuordnung zu jeder Federeinheit 30 der Dämpferelementenanordnung 32 einen Radialabstützbereich 50 bzw. 50' aufweisen. Die beiden Radialabstützorgane 46, 46' sind jedoch derart eingebaut, dass sie mit ihren Radialabstützbereichen 50, 50' in Umfangsrichtung bezüglich einander verdreht sind, so dass in Zuordnung zu jeder Federeinheit 30 nunmehr ein Radialabstützbereich 50 des ringartigen Radialabstützorgans 46 und ein Radialabstützbereich 50' des ringartigen Radialabstützorgans 46' vorgesehen ist. Wie vor allem in Fig. 15 erkennbar, können die Federeinheiten 30, die hier jeweils wieder eine in Umfangsrichtung vergleichsweise langgestreckte Schraubendruckfeder 34 umfassen können, so aufgebaut sein, dass nunmehr an zwei Längenabschnitten die Windungen einen etwas größeren Abstand aufweisen, um dort in der vorangehend beschriebenen Art und Weise die Zusammenwirkung mit einem Radialabstützbereich 50 bzw. 50' zu ermöglichen. Hier kann beispielsweise vorgesehen sein, dass durch diese Bereiche größeren Windungsabstands eine jeweilige Schraubendruckfeder in drei näherungsweise gleichlange Längenabschnitte untergliedert ist. Jeder der Radialabstützbereiche 50, 50' kann wieder Vorsprünge 54, 56 bzw. 54', 56' aufweisen, welche einen Windungsabschnitt der Schraubendruckfeder 34 in Umfangsrichtung zwischen sich einschließen und somit eine in Umfangsrichtung feste Ankopplung des jeweiligen Radialabstützorgans 46 bzw. 46' gewährleisten.

Wie man in Fig. 16 weiterhin erkennt, kann auch bei dieser Anordnung vorgesehen sein, dass die beiden ringartigen Abstützorgane 46 und 46' durch das mit dem Deckscheibenelement 14 fest verbundene Ringelement 66 und die daran vorgesehene Lagerfläche 64 radial zentriert bzw. gelagert sind, wobei hier beispielsweise eines der Radialabstützorgane dann auch unter Zwischenlagerung des anderen Radialabstützorgans radial zentriert sein kann.

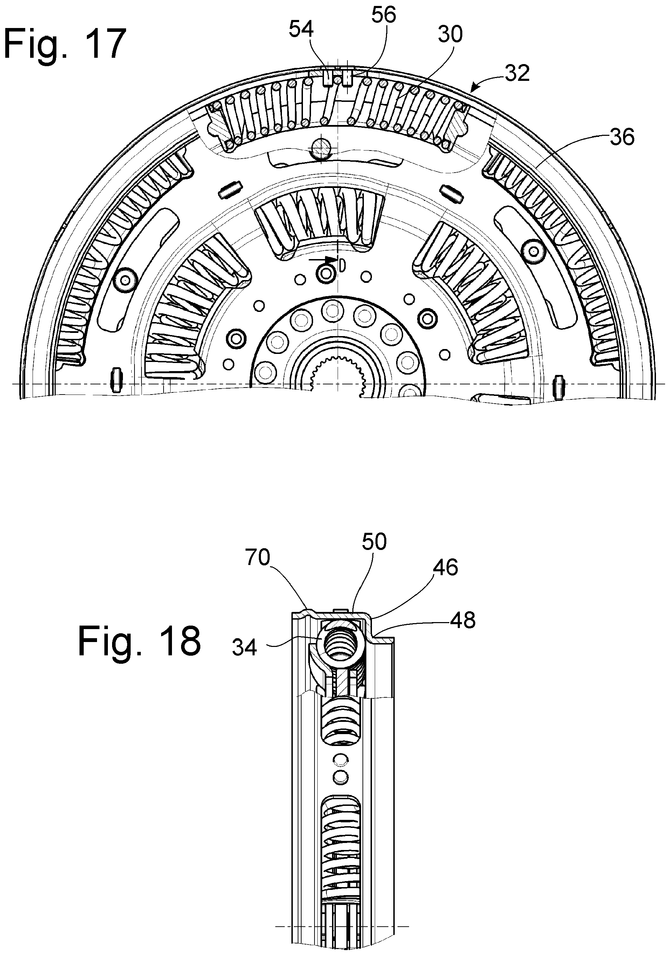

Eine weitere Variante einer erfindungsgemäß aufgebauten Torsionsschwingungsdämpferanordnung ist in den Fig. 17 bis 21 gezeigt. Bei dieser Ausgestaltungsform ist das ringartige Radialabstützorgan 46 als die Dämpferelementenanordnung 32 bzw. deren Schraubendruckfedern 34 radial umgebender, beidseits der Schraubendruckfedern 34 geschlossener Ring ausgebildet. D.h., das Radialabstützorgan 46 weist sowohl den Ringkörper 48 als auch den Versteifungsring 70 als integralen und durch die Radialabstützbereiche 50 miteinander verbundenen Bestandteilen auf. Dieses ringartige Radialbstützorgan 46 kann beispielsweise durch Blechumformung hergestellt werden. Im Bereich der Radialabstützbereiche 50 können durch Umformung oder durch Einbringen entsprechender Bolzen oder Stifte wieder Vorsprünge 54, 56 bereitgestellt werden, welche eine Umfangsankopplung an die jeweils abzustützenden Federeinheiten 30 gewährleisten.

Weiter ist bei dieser Ausgestaltungsform die Umfangsabstützung der Federeinheiten 30 an den jeweiligen Umfangsabstützbereichen 18, 20 der Deckscheibenelemente 14 und 16 bzw. 18 der Nabenscheibe 26 über Federteller 72 realisiert. Diese weisen einen Radialsicherungsvorsprung 74 auf, welcher in entsprechende Aussparungen der Umfangsabstützbereiche 18, 20, 28 eingreift. Ferner weisen, wie die Ansicht der Fig. 20 zeigt, die Federteller 72 in die Umfangsenden 36, 38 der Schraubendruckfedern 34 eingreifende Sicherungsabschnitte 76 auf, so dass durch Formschlusswirkung hier für die radiale Abstützung der Schraubendruckfedern bzw. Federeinheiten 30 an den Umfangsabstützbereichen gesorgt ist.

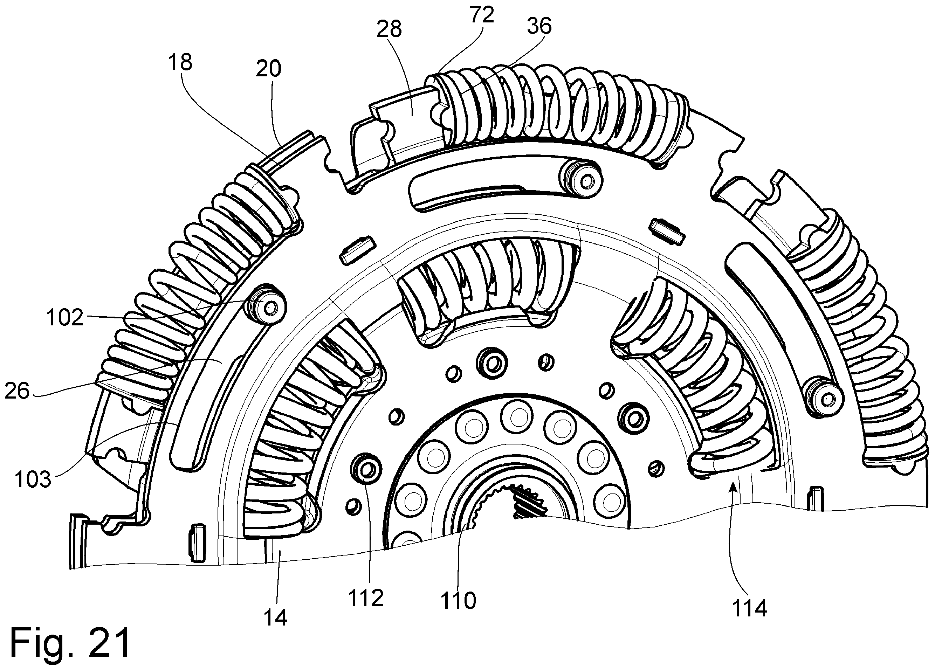

Ein unter Last erzeugter Verdrehzustand ist in Fig. 21 gezeigt. Man erkennt hier, dass die Nietbolzen 102, durch welche das vorangehend erläuterte Verzahnungsteil 104 mit der Nabenscheibe 26 fest verbunden ist, durch Zusammenwirkung mit den langlochartigen Öffnungen 103 eine Verdrehwinkelbegrenzungsfunktion aufweisen.

Eine weitere Abwandlung insbesondere hinsichtlich der Ausgestaltung der Federeinheiten 30 ist in Fig. 22 dargestellt. Hier umfasst jede der Federeinheiten 30 zwei in Serie geschaltete Schraubendruckfedern 34, 34'. Die Umfangsenden 36, 38 jeder Federeinheit 30 sind wieder an den Umfangsabstützbereichen 18, 20 bzw. 28 der Deckscheibenelemente 14, 16 bzw. der Nabenscheibe 26 abgestützt, und zwar beispielsweise über die bereits vorangehend erläuterten Federteller 72. An ihren einander zugewandt liegenden Zwischenenden 82 bzw. 84 sind die Federn 34' und 34 beispielsweise wiederum über Federteller 72 an über seinem Umfangsabstützbereich 86 eines im Wesentlichen frei drehbaren Zwischenrings 88 abgestützt. Bei Momenteneinleitung beaufschlagt beispielsweise der in Fig. 22 links erkennbare Umfangsabstützbereich 28 der Nabenscheibe 26 die Schraubendruckfeder 34 der gezeigten Federeinheit 30, welche in ihrem Zwischenende 82 über dem Federteller 72 den Umfangsabstützbereich 86 und über diesen das Zwischenende 84 der zweiten Schraubendruckfeder 34 dieser Federeinheit 30 belastet. Diese stützt sich an ihrem anderen Ende, also dem Umfangsende 38 dieser Federeinheit 30 am Umfangsabstützbereich 18 bzw. 20 der Deckscheibenelemente 14, 16 ab. Auf diese Art und Weise wird es möglich, durch die serielle Schaltung mehrerer Federn bei den Federeinheiten 30 die Umfangslänge der Federn zu verkürzen, was auch deren Tendenz, bei Fliehkräften nach radial außen auszuweichen, verringert. Gleichwohl ist es auch bei einer derartigen Anordnung vorteilhaft, mit einem erfindungsgemäßen ringartigen Radialabstützorgan zu arbeiten, wobei bei dieser Anordnung entsprechend der Anzahl an seriell geschalteten Federn einer jeweiligen Federeinheit dann auch unabhängig voneinander bewegbar mehrere Radialabstützorgane vorgesehen sein sollten, so wie dies beispielsweise in der Ausgestaltungsform der Fig.13 zu erkennen ist.

Abschließend sei noch darauf hingewiesen, dass vorangehend der Einsatz einer erfindungsgemäßen Torsionsschwingungsdämpferanordnung in einem hydrodynamischen Drehmomentwandler als Anwendungsbeispiel beschrieben wurde. Es ist selbstverständlich, dass der erfindungsgemäße Aufbau mit einem oder mehreren ringartigen Radialabstützorganen auch bei in anderen Bereichen eingesetzten Torsionsschwingungsdämpferanordnungen, beispielsweise bei Zweimassenschwungrädern oder dergleichen, Anwendung finden kann. Selbstverständlich kann dieser Aufbau auch Anwendung finden, wenn die Torsionsschwingungsdämpferanordnung nicht zweistufig aufgebaut ist, wie dies im Anwendungsbeispiel der Fig. 23 veranschaulicht ist, sondern wenn nur eine Dämpferelementeneinheit vorgesehen ist.

## Patentansprüche

1. Torsionsschwingungsdämpferanordnung, umfassend eine Primärseite (24) und eine gegen die Wirkung einer Dämpferelementenanordnung (32) bezüglich der Primärseite (24) um eine Drehachse (A) drehbare Sekundärseite (12), wobei die Dämpferelementenanordnung (32) eine Mehrzahl von in Umfangsrichtung aufeinander folgend angeordneten Federeinheiten (30) umfasst und die Primärseite (24) und die Sekundärseite (12) für jede Federeinheit (30) Umfangsabstützbereiche (18, 20, 28) aufweisen, an welchen die Federeinheiten (30) mit jeweiligen Umfangsenden (36, 38) abstützbar sind, ferner umfassend eine Radialabstützanordnung (44) zur radialen Abstützung wenigstens einer Federeinheit (30) in einem Umfangsbereich zwischen ihren Umfangsenden (36, 38), wobei die Radialabstützanordnung (44) wenigstens ein ringartiges Radialabstützorgan (46; 46, 46'; 46a) umfasst, das in Zuordnung zu der wenigstens einen der Federeinheiten (30) einen zwischen den Umfangsenden (36, 38) diese radial abstützenden Radialabstützbereich (50; 50, 50') aufweist, wobei das wenigstens eine ringartige Radialabstützorgan (46; 46, 46') bezüglich der Primärseite (24) und der Sekundärseite (12) um die Drehachse (A) drehbar ist, und wobei das wenigstens eine ringartige Radialabstützorgan (46; 46, 46') einen Ringkörper (48; 48, 48') umfasst, von welchem eine Mehrzahl von Radialabstützbereichen (50; 50, 50') an verschiedenen Umfangspositionen ausgehen, welche nach radial außen sich erstrecken und eine radial abgestützte Federeinheit (30) radial außen und axial übergreifen,
**dadurch gekennzeichnet, dass** der Ringkörper (48; 48, 48') des wenigstens einen ringartigen Radialabstützorgans (46; 46, 46') axial folgend auf die Federeinheiten (30) angeordnet ist, und dass die Radialabstützbereiche (50; 50, 50') durch einen Versteifungsringbereich (70; 70, 70') miteinander verbunden sind.

2. Torsionsschwingungsdämpferanordnung nach Anspruch 1,
**dadurch gekennzeichnet, dass** jede Federeinheit (30) eine Mehrzahl von in Umfangsrichtung aufeinander folgenden Federn (34, 34') umfasst, die an einander gegenüberliegenden Zwischenenden (82, 84) durch Zwischenabstützelemente (86) bezüglich einander abgestützt sind.

## Claims

1. Torsional vibration damper arrangement, comprising a primary side (24) and a secondary side (12) which can be rotated about a rotational axis (A) with regard to the primary side (24) counter to the action of a damper element arrangement (32), the damper element arrangement (32) comprising a plurality of spring units (30) which are arranged so as to follow one another in the circumferential direction, and the primary side (24) and the secondary side (12) having circumferential supporting regions (18, 20, 28) for each spring unit (30), on which supporting regions (18, 20, 28) the spring units (30) can be supported by way of respective circumferential ends (36, 38), comprising, furthermore, a radial supporting arrangement (44) for radial support of at least one spring unit (30) in a circumferential region between its circumferential ends (36, 38), the radial supporting arrangement (44) comprising at least one ring-like radial supporting member (46; 46, 46'; 46a) which has, in a manner which is assigned to the at least one of the spring units (30), a radial supporting region (50; 50, 50') which radially supports the circumferential ends (36, 38) between the latter, it being possible for the at least one ring-like radial supporting member (46; 46, 46') to be rotated about the rotational axis (A) with regard to the primary side (24) and the secondary side (12), and the at least one ring-like radial supporting member (46; 46, 46') comprising a ring body (48; 48, 48'), from which a plurality of radial supporting regions (50; 50, 50') emanate at different circumferential positions, which radial supporting regions (50; 50, 50') extend radially outwards and engage over a radially supported spring unit (30) radially on the outside and axially, **characterized in that** the ring body (48; 48, 48') of the at least one ring-like radial supporting member (46; 46, 46') is arranged so as to follow the spring units (30) axially, and **in that** the radial supporting regions (50; 50, 50') are connected to one another by way of a reinforcing ring region (70; 70, 70').

2. Torsional vibration damper arrangement according to Claim 1, **characterized in that** each spring unit (30) comprises a plurality of springs (34, 34') which follow one another in the circumferential direction and are supported with regard to one another by way of intermediate supporting elements (86) at intermediate ends (82, 84) which lie opposite one another.

## Revendications

1. Système d'amortissement des oscillations de torsion, comprenant un côté primaire (24) et un côté secondaire (12) pouvant tourner par rapport au côté primaire (24) autour d'un axe de rotation (A) à l'encontre de l'effet d'un agencement d'éléments d'amortissement (32), l'agencement d'éléments d'amortissement (32) comprenant une pluralité d'unités de ressort (30) disposées les unes derrière les autres dans la direction périphérique et le côté primaire (24) et le côté secondaire (12) présentant pour chaque unité de ressort (30) des régions de support périphériques (18, 20, 28) au niveau desquelles les unités de ressort (30) peuvent être supportées par des extrémités périphériques respectives (36, 38), comprenant en outre un agencement de support radial (44) pour le support radial d'au moins une unité de ressort (30) dans une région périphérique entre ses extrémités périphériques (36, 38), l'agencement de support radial (44) comprenant au moins un organe de support radial de type annulaire (46 ; 46, 46' ; 46a) qui présente, en association avec l'au moins une des unités de ressort (30), une région de support radial (50 ; 50, 50') entre les extrémités périphériques (36, 38) supportant celles-ci radialement, l'au moins un organe de support radial de type annulaire (46 ; 46, 46') pouvant tourner par rapport au côté primaire (24) et au côté secondaire (12) autour de l'axe de rotation (A), et l'au moins un organe de support radial de type annulaire (46 ; 46, 46') comprenant un corps annulaire (48 ; 48, 48') duquel part une pluralité de régions de support radial (50 ; 50, 50') au niveau de différentes positions périphériques qui s'étendent radialement vers l'extérieur et qui viennent en prise par le dessus radialement à l'extérieur et axialement avec une unité de ressort supportée radialement (30) ,
**caractérisé en ce que** le corps annulaire (48 ; 48, 48') de l'au moins un organe de support radial de type annulaire (46 ; 46, 46') est disposé axialement successivement sur les unités de ressort (30) et **en ce que** les régions de support radial (50 ; 50, 50') sont connectées les unes aux autres par une région annulaire de renforcement (70 ; 70, 70' ) .

2. Système d'amortissement des oscillations de torsion selon la revendication 1,
**caractérisé en ce que** chaque unité de ressort (30) comprend une pluralité de ressorts (34, 34') successifs dans la direction périphérique, qui sont supportés les uns par rapport aux autres au niveau d'extrémités intermédiaires mutuellement opposées (82, 84) par des éléments de support intermédiaires (86).
